# EUROPEAN PATENT SPECIFICATION

(11) **EP 0 499 729 B1**
(45) Date of publication and mention of the grant of the patent: **19.04.1995**
(21) Application number: 91301385.0
(22) Date of filing: 21.02.1991
(51) Int. Cl.: A63F 9/22, H04S 5/00, H04R 3/12

(54) **Sound imaging apparatus for a video game system**
Schallbildvorrichtung für Videospielsystem
Appareil générateur d'image sonore pour système de jeu vidéo

(43) Date of publication of application: 26.08.1992
(73) Proprietor: QSOUND LIMITED, Calgary, Alberta T1Y 5L3 (CA)
(72) Inventor: Lowe, Danny D., Calgary, Alberta T1Y 5L3 (CA); Lees, John W., Calgary, Alberta T1Y 5L3 (CA)
(74) Representative: Ayers, Martyn Lewis Stanley

(56) References cited:
- EP-A- 0 036 337
- EP-A- 0 142 213
- EP-A- 0 357 402
- EP-A- 0 378 386
- DE-A- 3 238 933
- US-A- 4 792 974

## Description

This invention relate generally to interactive video games and, more specifically, to apparatus for utilizing sound location information placed in the video game program and adapting a video game system for utilizing that sound location information.

Interactive video games have now become so wellknown and commonplace that practically everyone has either played one of these games or has watched such games being played by other. Video games are available for use at home utilizing the regular television receiver or television monitor that is present in the nome, or video games can be played in an arcade-type situation, in which each game has its own video screen and sound playback equipment. EP-A-378386 discloses a portable video game system corresponding to the pre-characterising part of claim 1 that includes a sound generator operating in conjunction with a central processing unit. Various game cartridges can be plugged into the video game. A number of sound generating circuits produce signals fed to an analog switching network operating as a multiplexer, so that the sounds are selectively applied to the left and right speakers either exclusively or with a predetermined mix. The video game includes a mechanism whereby the player can cause the video figure to move by applying so-called direction data. The analog multiplexer is controlled by a memory portion of the central processing unit to direct the sounds from the sound generator circuits to the two speakers.

The present invention is directed generally to a video game system in which sound imaging is provided to a conventional video game system, the present invention further provides specialized sound directional data included in the game cartridge and is intended to permit an existing video game to be adapted to practice the present invention and to provide improved results. This occurs by plugging into the console or base unit a different player control unit that can contain a number of different circuit elements that permit operation of the joystick to, in turn provide improve sound imaging.

Generally, although the interactive video games have now become sophisticated in their video displays, the audio portion of the game has not been as well developed. For that reason, it has been proposed to employ a sound imaging system, such as described and disclosed in EP-A-0357402 assigned to the assignee hereof. The disclosure of this above-identified patent application is incorporated herein by reference. In that application, a system is disclosed whereby the apparent location of sounds produced by two, spaced-apart speakers can be controlled so that the location of the sound source appears to the listener to be at a point other than the actual location of the speakers. This is accomplished by using empirically derived transfer functions that operate on a plurality of monaural input signals. The two-channel output signals produced by each transfer function, each with a frequency dependent differential phase and amplitude relationship, are summed to provide a two-channel output. The phase and amplitude adjustments are made individually for successive frequency bands over the audio spectrum. The transfer function can be implemented by a digital filter and, generally, a separate transfer function is required for each discrete location from which the sound apparently emanates. Use of this sound location system will greatly enhance the audio program material that goes along with the interactive video game. Nevertheless, the interconnection of the video game subsystems and the replacement of some existing subsystems to provide a commercially viable system has become problematical.

### OBJECTS AND SUMMARY OF THE INVENTION

It is an object of this invention to provide a sound processor for a video game system that operates upon the monaural output of the audio synthesizer of the video game in accordance with sound location information derived from the game software to give the game player the impression that the sound is emanating from a location other than the actual locations of the loudspeakers.

According to the present invention, there is provided an interactive video game system for producing a sound image for playback on a pair of speakers in a video game comprising a central processing unit and a central processing unit bus in a base unit and a separable game cartridge including video display data, audio data, and sound location data inserted into the game cartridge and an audio synthesizer connected to the central processing unit for producing audio signals based on audio data output from the game cartridge and fed through the central processing unit: and characterised by
a player control unit having a housing containing a micro-controller, a second audio synthesizer and a sound processor connected to through the micro-controller to the central processing unit bus and connected to the second audio synthesizer contained in the housing for processing each of the monaural audio signals produced by the second audio synthesizer in response to sound location data from the central processing unit and including transfer functions for operating on the monaural audio signals from the second audio synthesizer to produce two-channel sound signals having a differential phase and amplitude therebetween on a frequency dependent basis, said two-channel signals being fed to the pair of speakers, in which the central processing unit bus connects the central processing unit to a serial data port, said control unit being connected for communicating with said central processing unit via said serial data port.

The predetermined transfer function can be implemented by a digital filter and, generally, a separate transfer function is required for each discrete sound location. The values making up the transfer function over the audio spectrum are derived empirically. The thusly produced two-channel sound signals for each monaural input signal are summed to produce a two-channel output. In addition, a separate audio synthesizer along with a sound processor can be connected to the central processing unit by way of a serial or parallel port by way of an extension of the central processing unit bus. For example, the sound processor and audio synthesizer can be arranged in the hand-held control unit, so that sound information contained on the game cartridge can be passed through the central processing unit by a serial port to the sound synthesizer and sound processor to produce two-channel sound signals.

### BRIEF DESCRIPTION OF THE DRAWINGS

Fig. 1 schematically illustrates an interactive video game system employing a sound processor for producing two-channel sound signals derived from a monaural sound signal and sound location information contained within a game cartridge and to which the present invention may be applied
Fig. 2 is a schematic in block diagram form showing one version of the system of Fig. 1 in more detail;
Fig. 3 is a schematic in block diagram form of a video game in which a sound processor and audio synthesizer are provided for location within the hand-held control unit for producing two-channel sound signals based upon sound location information derived from the game cartridge according to an embodiment of the present invention;
Fig. 4 is a block diagram showing an embodiment of a sound processor according to the present invention;
Fig. 5 is a block diagram showing a further embodiment of a sound processor according to the present invention;
Fig. 6 is a block diagram showing a number of sound processors connected together according to an embodiment of the present invention; and
Fig. 7 is a block diagram showing a number of sound processors as in Fig. 5 connected together according to another embodiment of the present invention.

### DETAILED DESCRIPTION OF PREFERRED EMBODIMENTS

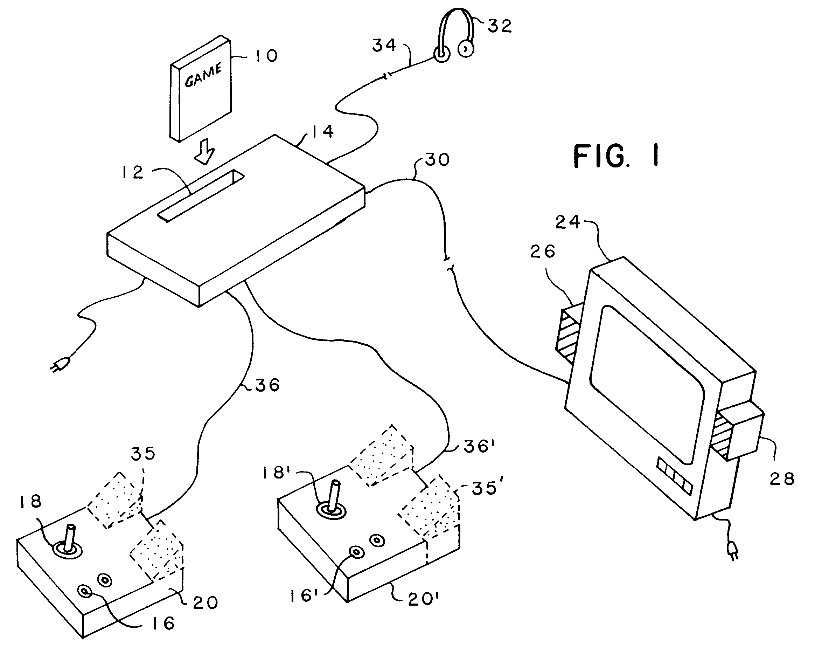

As represented in Fig. 1, a game cartridge 10 is generally adapted to be inserted into a slot 12 formed in a video game base unit 14. In this system of Fig. 1, the game cartridge 10 includes sound location information that permits utilization of the principles of EP-A-0357402 along with the typical sound program material in the form of cues for a sound synthesizer that are normally included.

In regard to such sound location information, it must be first noted that game cartridges can include three kinds of sound information. First, some game cartridges provide stationary sounds that may relate to the background environment of the game or may include musical sounds that are reproduced by the synthesizer while the game is being played. Some game cartridges also include dynamic sounds that are related to the particular picture being provided on the video monitor. For example, in the event of a picture being displayed that relates to a thunderstorm, such dynamic sounds might include sounds of thunder. Finally, some video game cartridges provide dynamic sounds that are created by actions of the game player, for example, the player may create the sound of gun fire or the like by utilizing buttons, shown typically at 16, or a joystick 18 located at the player control unit 20. There are occasions where two remote control units are provided and generally such units are identical, with the second one shown in Fig. 1 at 20' having buttons 16' and joystick 18'.

Thus, it is seen that at least three different classes of sound can be made available on a typical game cartridge. Nevertheless, by following the teaching of the above-referenced EP-A-0357402 relating to sound image processing, and the present invention the apparent location to the listener of all three of these different sounds can be controlled. That is, assuming in the embodiment of Fig. 1 that a video monitor 24 is provided with left and right channel speakers, 26 and 28, respectively, and that the monitor 24 is connected to the video game base unit 14 by a cable 30, then upon the output of the sound following the processing of the sound location information derived from the game cartridge 10 in the sound processor (not shown in Fig. 1) located inside the base unit 14 or player control unit 20, for example, the player in front of video monitor 24 can have the impression that the sound is emanating from locations either behind video monitor 24, to the left of speaker 26 or the right of speaker 28 or, in fact, behind the actual game player. The video signals for the game are also fed to monitor 24 over cable 30.

In the event that the game player does not wish to employ speakers 26, 28 of video monitor 24 but instead desires to utilize earphones, then such earphones 32 are typically connected to a jack provided on video game base unit 14 by a cable 34. Upon plugging in earphones 32 the audio signal to the monitor speakers 26, 28 will be disconnected, and the sound will be reproduced over earphones 32, and it will still produce the sound imaging to the listener in accordance with the sound positioning information originally contained in game cartridge 10.

In accordance with another aspect of the present invention, the player control unit 20 can be provided with individual speakers, shown in phantom at 35, and the sound produced over those speakers 35 instead of over the video monitor speakers.

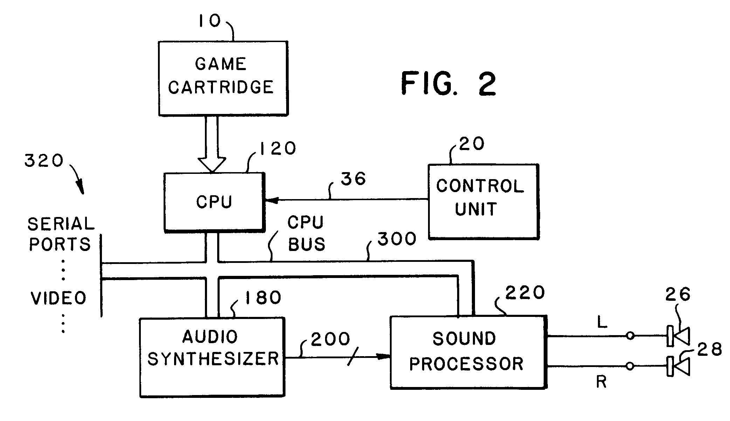

One version of the system of Fig. 1, not embodying the invention, is shown in more detail in Fig. 2, in which a central processing unit (CPU) 120 is connected to an audio synthesizer 180 and a sound processor 220 by way of a CPU bus 300. Accordingly, the commands and instructions for synthesizer 180 can be passed in parallel along CPU bus 300, and the sound location information from game cartridge 10 can also be passed by CPU 120 to sound processor 220 on CPU bus 300. The output of synthesizer 180 may be on a single line, if the outputs are multiplexed, or the output can be on the plurality of lines 200, each of which represents a specific monaural sound signal. These monaural sound signals are fed to sound processor 220, wherein the signals are passed through the digital filters. CPU bus 300 is also connected typically to one or more serial ports, shown typically at 320, that are used for connection to the video monitor and the like.

The two-channel sound signals output from sound processor 22 are fed to appropriate speakers 26, 28, respectively. These output signals could also be fed to earphones as well as any other external loudspeakers. It should be noted that although a two-channel output seems to imply a stereo signal, such is not necessarily the case, because stereo signals do not have the differential phase and amplitude relationship on a frequency dependent basis as do the two-channel signals produced by this embodiment of the present invention.

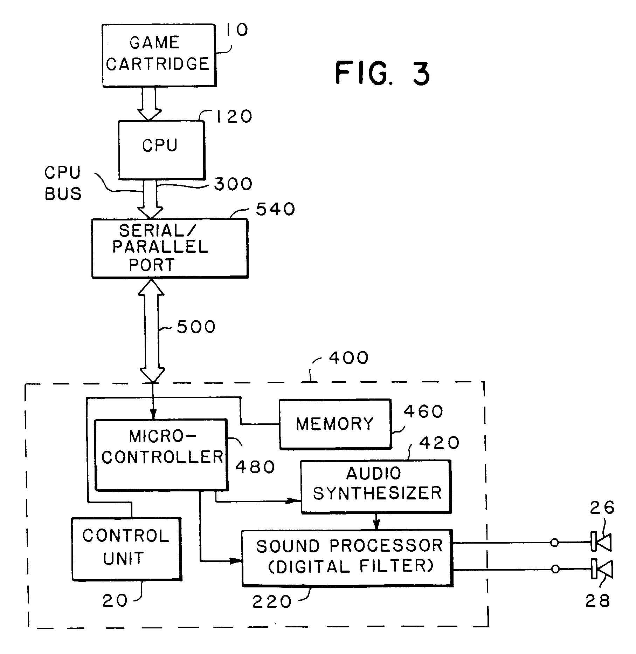

Fig. 3 represents an embodiment of the present invention in which sound processor 220, which utilizes the sound location information contained in game cartridge 10, is arranged within the same housing 400 that contains hand-held control unit 20. This embodiment is useful when the CPU bus extension in the base unit of the existing video game is not available, so that the serial or parallel port connection for control unit 14 must be employed.

Sound processor 220 and new external audio synthesizer 420 are provided in the same housing as control unit 14 and these units communicate with CPU 120 by ways of a serial or parallel port connected to the central processing unit bus. Specifically, a multi-line cable 500 from control unit 14 is connected to the serial or parallel port 540 that is connected to CPU bus 300. In addition to separate, external audio synthesizer 420 and sound processor 220, because of data rate limitations of the serial or parallel port connection between synthesizer 420 and game cartridge 10 and CPU 120, a memory 460 is useful for retaining the audio program information from game cartridge 10 for subsequent use by a microcontroller 480, which controls the feeding of the sound information to audio synthesizer 420. The sound location information is fed to sound processor 220 through microcontroller 480 and is controlled by CPU 120 in accordance with the play of the game.

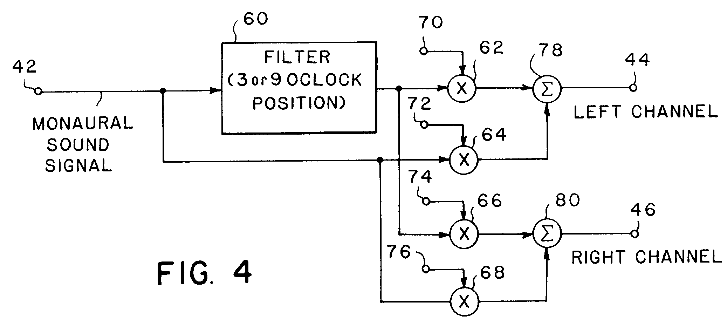

Fig. 4 represents an implementation whereby only a single filter 60 and four gain-adjusting circuits 62, 64, 66, and 68 produce a number of transfer functions sufficient to provide a sound image at a left position, a right position, and all intermediate positions. Specifically, filter 60 is a so-called 3 o'clock and 9 o'clock transfer function, that is, it produces a 3 o'clock and 9 o'clock position in the sound location and then the four gain-adjusting circuits 62, 64, 66, 68 are controlled to provide intermediate positions in response to control parameters from the game cartridge fed in at inputs 70, 72, 74, 76, respectively. In effect, the implementation of Fig. 4 mixes a full-left or full-right position variably with a direction signal, to provide intermediate positions and such mixing occurs in summers or mixer units 78 and 80.

As an operative example, wherein the sound is to be located in the full-left position, that is, at 9 o'clock, then the gain in gain adjuster 62 is set to zero by a signal at input 70, the gain in gain adjuster 64 is set to its maximum by a signal at input 72, the gain in gain adjuster 66 is set to its maximum by a signal at input 74, and the gain in gain adjuster 68 is set to zero by a signal at input 76. To move from the full-left position to approximately the position of the left loudspeaker or transducer, the gain in gain adjuster 66 is set to zero by a signal at input 74. To move from the left loudspeaker to the right loudspeaker, the gain in gain adjuster 64 is varied to zero by a signal at input 72 and the gain in gain adjuster 68 is set to its maximum by a signal at input 76. In other words, these gain adjuster settings would result in what would be seen to be a standard stereo signal with both left and right channels being substantially equal. Then, to move from the right speaker to the full right position, that is, 3 o'clock, gain adjuster 62 would be varied to have a maximum gain by a signal at input 70.

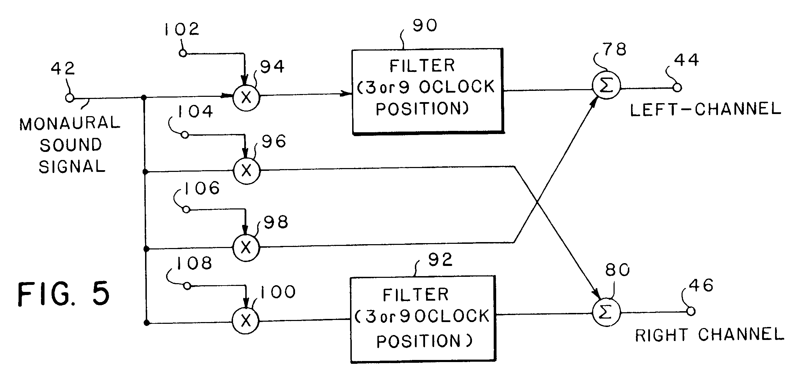

An alternate implementation of the embodiment of Fig. 4 is shown in Fig. 5. The embodiment of Fig. 5 employs two 3/9 o'clock filters 90, 92 and employs to summers or adders 78, 80 as in Fig. 4. A gain adjuster 94 is provided at the input to filter 90 and the same monaural input signal at terminal 42 is fed through a second gain adjuster 96 directly to summer 80 without any adjustment. Similarly, the same input monaural signal is fed through gain adjuster 98 directly with no adjustment to summer 78. The input of second filter 92 is provided with a gain adjuster 100 and the output of second filter 92 is fed to adder 72 that also receives the output of summer 96. Once again, by adjusting the gains in gain adjusters 94, 96, 98, 100 in response to the control parameters from the game cartridge fed in on lines 102, 104, 106, 108, respectively, it is possible to mix the full-left or full-right positions between the full-left and full-right positions.

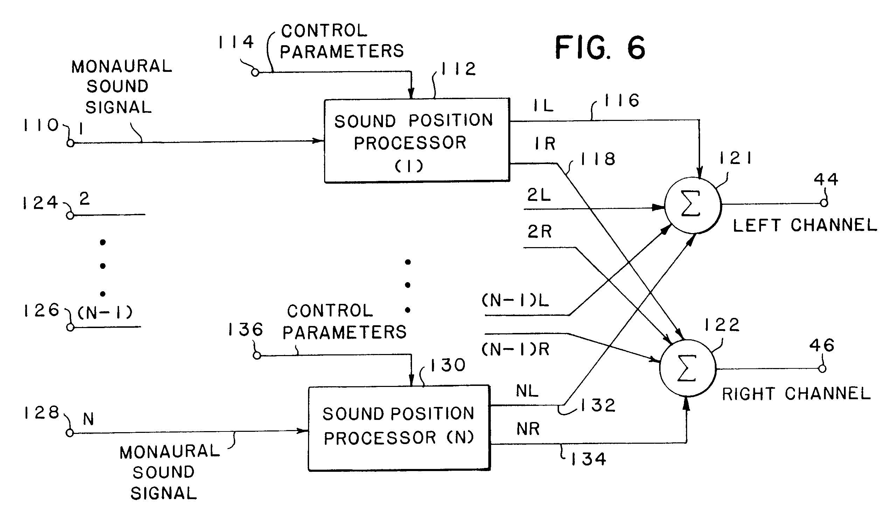

According to the inventive sound position processor of the present invention, regardless of the number of monaural input signals that are available, the sound processor produces only two output signals therefrom. Each audio signal produced by an audio synthesizer can have its own processor according to the present invention so that certain signals can be positioned to various points. For example, as shown in Fig. 6, multi-input channels are organized to have each signal processed in accordance with its own individual control parameters and the multiple outputs are then summed to form the left and right channels. More specifically, a monaural sound signal from an audio synthesizer of a video game, for example, is fed in at input terminal 110 to a first sound position processor 112 that can be embodied as shown in Figs. 4 and 5, for example. The sound position processor 112 also receives the positioning control parameters at input terminal 114 that determine whether or not and to what extent the monaural sound signal at input 110 will be relocated in relation to the loudspeakers. Sound position processor 112 produces a left-channel signal on line 116 and a right-channel signal on line 118, with the left-channel signal being fed to a first adder 121 and the right-channel signal being fed to a second adder 122. A sound position processor, each identical to sound position processor 112, is provided for each of the separate monaural input signals. For example, a second monaural signal is fed in at input terminal 124, input terminal 126 receives the (N-1) monaural input signal, and input terminal 128 receives the Nth monaural input signal that is produced either by the audio synthesizer or from some other sound source. As in the first channel, the monaural sound signal at input terminal 128, for example, is fed to a sound position processor 130 that produces a corresponding left-channel output on line 132 fed to adder 121 and a right-channel output on line 134 fed to adder 122. Once again, the positioning is controlled by a signal at input terminal 136 relating to the control parameters for the sound image location as derived from the game cartridge shown in Fig. 1. Each sound position processor that is arranged between the first sound processor 112 and the last sound position processor 130 provides corresponding left and right output signals fed to adders 121 and 122, respectively. Adder 121 then combines all input signals and produces the left-channel output signal at terminal 44 and, similarly, adder 122 combines all input signals and provides the right-channel output at terminal 46. It is understood, of course, that the various sound position processors shown in Fig. 6 can assume any of the various embodiments described above.

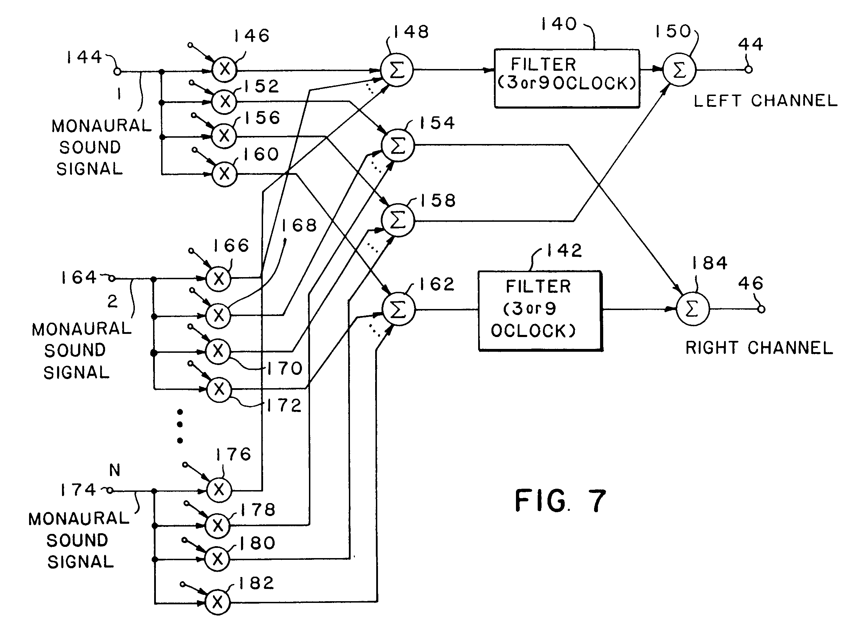

While the embodiment shown in Fig. 6 comprising a so-called group positioner functions perfectly and, indeed, operates with high efficiency, it is nonetheless somewhat expensive because it has a large number of sound positioners, which comprise digital filters in some embodiments and can, thus, be quite expensive. On the other hand, only two adders are required and adders are relatively inexpensive compared to digital filters. Therefore, the present invention provides another embodiment, shown in Fig. 7, of a group positioner that is quite inexpensive relative to the embodiment to Fig. 6 because only two 3/9 o'clock transfer functions are required.

Turning then to Fig. 7, a multiple channel positioner is shown that employs only two 3/9 o'clock filters 140 and 142, but employs a number of adders and gain adjusters that are relatively inexpensive compared to the filters. More specifically, in the first channel, a monaural input signal is provided at input terminal 144 and is fed through a first gain adjuster 146 to a signal adder 148, whose output is the input to a first 3/9 o'clock filter 140. The output of filter 140 is fed to another signal adder 150. The monaural sound signal at input terminal 144 is also fed to a second gain adjuster 152 whose output is fed to another signal adder 154. The same input signal is also fed to a third gain adjuster 156 whose output is fed to adder 158, and to a fourth gain adjuster 160 that has an output fed to a fourth input adder 162. This arrangement is somewhat similar to the system shown in Fig. 5, for example. In fact, the embodiment of Fig. 7 can be seen as a specialized case of the embodiment of Fig. 5 in which a number of adders are provided ahead of the two 3/9 o'clock filters. The second monaural sound signal is fed in at input terminal 164 to gain adjuster 166, whose output is fed to adder 148, and the second monaural input signal is also fed to gain adjuster 168, whose output goes to adder 154, and to gain adjuster 170, whose output goes to adder 158, and to gain adjuster 172, whose output goes to adder 162. Any number of channel inputs can be provided and the last channel input in this example is represented as channel N input at terminal 174. The signal input at 174 is fed once again to four gain adjusters 176, 178, 180, 182, whose outputs are fed, respectively, to adders 148, 154, 158, and 162. As indicated, the output of adder 148 is fed to 3/9 o'clock filter 140, whose output is fed to output signal adder 150, and the output of adder 154 is fed to an output signal adder 184, the output of adder 158 is also fed to output signal adder 150 and the output of adder 162 is fed to the second 3/9 o'clock filter 142, whose output is also fed to output signal adder 184. Accordingly, output signal adders 150 and 184 produce the left-channel signal at output terminal 44 and the right-channel signal at output terminal 46, respectively.

Comparing the embodiment of Fig. 7 with that of Fig. 6, it is easily seen that a cost savings in circuitry is achieved because only two filters are required regardless of the number of input channels, whereas in the embodiment of Fig. 6, at least one filter is required for each input channel.

## Claims

1. An interactive video game system for producing a sound image for playback on a pair of speakers in a video game comprising a central processing unit (120) and a central processing unit bus (300) in a base unit (10) and a separable game cartridge (10) including video display data, audio data, and sound location data inserted into the game cartridge and an audio synthesizer connected to the central processing unit (120) for producing audio signals based on audio data output from the game cartridge and fed through the central processing unit (120); and characterised by
a player control unit (400) having a housing (20) containing a micro-controller (480), a second audio synthesizer (420) and a sound processor (220) connected to through the micro-controller (480) to the central processing unit bus (300) and connected to the second audio synthesizer (420) contained in the housing (20) for processing each of the monaural audio signals produced by the second audio synthesizer (420) in response to sound location data from the central processing unit (120) and including transfer functions for operating on the monaural audio signals from the second audio synthesizer (420) to produce two-channel sound signals having a differential phase and amplitude therebetween on a frequency dependent basis, said two-channel signals being fed to the pair of speakers (35), in which the central processing unit bus (300) connects the central processing unit (120) to a serial data port (540), said control unit (400) being connected for communicating with said central processing unit (120) via said serial data port (540).

2. An interactive video game system according to claim 1, wherein said pair of speakers (35) are attached to said housing (20) of said player control unit.

3. An interactive video game system according to claim 1, further comprising a memory (460) arranged in said housing (20) of said player control unit and being connected to said serial data port (540), so that said memory (460) receives for storage all audio data from the game cartridge (10) through the microcontroller (480), said microcontroller (480) subsequently receives commands from said central processing unit (120) for supplying said stored audio data from said memory (460) to said second audio synthesizer (420) and supplying said sound location data to said sound processor (220), whereby said sound processor (220) produces said two-channel sound signals from monaural sound signals output from said external sound synthesizer (420).

4. An interactive video game system according to claim 1, wherein the sound processor comprises:
a first plurality of signal level adjusters (64,68) receiving said two-channel sound signals derived from the monaural audio signals and producing respective level adjusted signals in response to said sound positioning data (70,76) from said game cartridge;
a second plurality of signal level adjusters (62,66) each receiving an output signal from the sound processor and producing respective level adjusted signals in response to said sound positioning information (72,74) derived from said game cartridge (10); and
first and second signal Summing means (78,80) each for summing one respective output signal from each of said first and second plurality of signal level adjusters and each producing a respective summed output signal therefrom fed to a respective one of the pair of loudspeakers.

5. An interactive video game system according to claim 4, wherein said first plurality of signal level adjusters comprises two signal attenuators, each responsive to the sound positioning information from the game cartridge to selectively produce a maximum gain or a minimum gain.

6. An interactive video game system according to claim 4, wherein said second plurality of signal level adjusters comprises two signal attenuators, each responsive to the sound positioning information from the game cartridge to selectively produce a maximum gain or a minimum gain.

7. An interactive video game system according to claim 1, wherein the sound processor comprises:
a plurality of signal level adjusters (94,96,98,100), each receiving the audio signal from the second audio synthesizer (420) and each adjusting the signal level thereof in response to the sound positioning information (102,104,106,108) from the game cartridge (10) and producing a respective level adjusted output signal;
first and second phase shift and amplitude adjusting means (90,92) each receiving a level adjusted output signal from a selected one of said plurality of signal level adjusters for producing a respective output signal having a predetermined phase shift and amplitude adjustment on a frequency dependent basis over substantially the audio frequency spectrum; and
first and second signal summing means (78,80), each receiving a respective output from said first and second phase shift and amplitude adjusting means and an output signal from signal level adjusters other than said selected ones for producing respective first and second summed output signals fed to said pair of loudspeakers, respectively.

8. An interactive video game system according to claim 1, wherein the processor comprises:
a plurality of phase shift and amplitude adjustment means (90,92), each receiving a respective one of the audio signals from the second audio synthesizer and dividing the audio signal and selectively shifting the phase and adjusting the amplitude of at least one of the divided audio signals in response to the sound positioning information from the game cartridge for producing first and second output signals having a differential phase and shift and amplitude adjustment on a frequency dependent basis; and
first and second signal summing means (78,80), each receiving a respective first and second output signal from each of said plurality of phase shift and amplitude adjustment means and each producing a respective summed signal fed to the pair of loudspeakers.

9. An interactive video game system according to claim 8, wherein each of said phase shift and amplitude adjustment means comprises:
means for splitting the audio signal from the second audio synthesizer into two identical audio signals;
filter means (60) for imparting a phase shift and amplitude adjustment to one of said two identical audio signals on a frequency dependent basis over substantially the audio spectrum;
a first plurality of signal level adjusters (64,68) receiving the said two identical audio signals and producing respective level adjusted signals in response to said sound positioning data from said game cartridge;
a second plurality of signal level adjusters (62,66) each receiving an output signal from said filter means and producing respective level adjusted signals in response to said sound positioning data from said game cartridge; and
third and fourth signal summing means each for summing one respective output signal from each of said first and second plurality of signal level adjusters and each producing a respective summed output signal therefrom fed to a respective one of said first and second signal summing means.

10. An interactive video game system according to claim 8, wherein each of said phase shift and amplitude adjustment means comprises a plurality of signal level adjusters, each receiving an audio signal from the second audio synthesizer and each adjusting the signal level thereof in response to the sound positioning data from the game cartridge and producing a respective level adjusted output signal;
first and second phase shifting and amplitude adjusting means each receiving a level adjusted output signal from a selected one of said plurality of signal level adjusters for producing a respective output signal having a predetermined phase shift and amplitude adjustment on a frequency dependent basis over substantially the audio frequency spectrum; and
third and fourth signal summing means, each receiving a respective output from first and second phase adjusting means and an output signal from signal level adjusters other than said selected ones for producing respective first and second summed output signals fed to said first and second signal summing means, respectively.

11. An interactive video game system according to claim 1, wherein the sound processor comprises:
a plurality of groups of four signal level adjusters (146,152,156,160; 166,168,170,172) each signal level adjuster in each group receiving a respective one of the plurality of audio signals from the second audio synthesizer and each adjusting the signal level thereof in response to the sound positioning information from the game cartridge and producing a respective level adjusted output signal;
first, second, third and fourth signal summing means (148,154,158,162), each receiving a signal from a respective level adjuster in each group and producing respective summed signals therefrom;
a first phase shift and amplitude adjusting means (140) receiving said summed signal from said first signal summing means and producing a first phase shifted and amplitude adjusted output signal therefrom;
a second phase shift and amplitude adjusting means (142) receiving said summed signal from said fourth signal summing means and producing a second phase shifted and amplitude adjusted output signal therefrom;
a fifth signal summing means (150) receiving said phase shifted and amplitude adjusted output signal from said first phase shift and amplitude adjusting means and a summed signal from said third signal summing means and producing an output therefrom fed to one of the pair of loudspeakers; and
a sixth signal summing means (184) receiving said phase shifted and amplitude adjusted signal from said second phase shift and amplitude adjusting means and a summed signal from said second signal summing means and producing an output therefrom fed to the other of the pair of loudspeakers.

## Patentansprüche

1. Interaktives Videospielsystem zur Erzeuergung eines Schallbildes für die Wiedergabe über ein Lautsprecherpaar in einem Videospiel, umfassend:
eine Zentraleinheit (120) und einen Bus (300) für die Zentraleinheit in einem Grundgerät (10) und eine abnehmbare Spielkassette (10) mit Video-Wiedergabedaten, Audiodaten und Schallokalisierungsdaten auf der Spielkassette und einen Audiosynthesizer, der mit der Zentraleinheit (120) verbunden ist, um Audiosignale auf Basis der von der Spielkassette ausgelesenen und über die Zentraleinheit (120) weitergegebenen Audiodaten zu erzeugen; und gekennzeichnet durch:
eine Steuereinheit (400) für das Wiedergabegerät mit einem Gehäuse (20), das einen Mikroprozessor (480), einen zweiten Audiosynthesizer (420) und einen Schallprozessor (220) enthält, der über den Mikroprozessor (480) mit dem Bus (300) der Zentraleinheit verbunden ist und mit dem zweiten Audiosynthesizer (420) in dem Gehäuse (20) verbunden ist, um jedes der monauralen Audiosignale zu verarbeiten, die vom zweiten Audiosynthesizer (420) in Reaktion auf die Schallokalisierungsdaten von der Zentraleinheit (120) erzeugt werden, und Übertragungsfunktionen enthält, um aus den monauralen Audiosignalen vom zweiten Audiosynthesizer (420) zweikanalige Schallsignale mit unterschiedlicher Phasenlage und Amplitude auf frequenzabhängiger Basis zu erzeugen, wobei die zweikanaligen Signale an das Lautsprecherpaar (35) übertragen werden, und wobei der Bus (300) der Zentraleinheit die Zentraleinheit (120) mit einer seriellen Datenschnittstelle (540) verbindet und die Steuereinheit (400) zur Kommunikation mit der Zentraleinheit (120) über die serielle Datenschnittstelle (540) angeschlossen ist.

2. Interaktives Videospielsystem nach Anspruch 1, bei dem das Lautsprecherpaar (35) am Gehäuse (20) der Steuereinheit für das Wiedergabegerät angebracht ist.

3. Interaktives Videospielsystem nach Anspruch 1, das außerdem einen Speicher (460) umfaßt, der im Gehäuse (20) der Steuereinheit für das Wiedergabegerät untergebracht ist und mit der seriellen Datenschnittstelle (540) verbunden ist, so daß der Speicher (460) über den Mikroprozessor (480) sämtliche Audiodaten von der Spielkassette (10) zur Speicherung erhält, wobei der Mikroprozessor (480) nachfolgend Anweisungen von der Zentraleinheit (120) erhält, um die gespeicherten Audiodaten vom Speicher (460) an den zweiten Audiosynthesizer (420) zu übertragen, und um die Schallokalisierungsdaten an den Schallprozessor (220) zu übertragen, wobei der Schallprozessor (220) die zweikanaligen Schallsignale aus monauralen Schallsignalen erzeugt, die vom externen Schallsynthesizer (420) geliefert werden.

4. Interaktives Videospielsystem nach Anspruch 1, bei dem der Schallprozessor folgendes umfaßt:
eine erste Vielzahl von Signalpegeljustierern (64, 68), die die zweikanaligen Schallsignale erhalten, die aus den monauralen Audiosignalen abgeleitet werden, und entsprechende pegeljustierte Signale in Reaktion auf die Schallpositionierungsdaten (70, 76) von der Spielkassette erzeugen;
eine zweite Vielzahl von Signalpegeljustierern (62, 66), von denen jeder ein Ausgangssignal vom Schallprozessor erhält und entsprechende pegeljustierte Signale in Reaktion auf die Schallpositionierungsdaten (72, 74) erzeugt, die von der Spielkassette (10) abgeleitet werden; und
erste und zweite Signalsummierungsvorrichtungen (78, 80) zur Summierung eines entsprechenden Ausgangssignals von jeder der ersten und der zweiten Vielzahl von Signalpegeljustierern, wobei jede ein entsprechendes Summenausgangssignal erzeugt, das an einen entsprechenden Lautsprecher des Lautsprecherpaares geliefert wird.

5. Interaktives Videospielsystem nach Anspruch 4, bei dem die erste Vielzahl von Signalpegeljustierern zwei Signalbedämpfer umfaßt, von denen jeder auf die entsprechende Schallokalisierungsinformation von der Spielkassette reagiert, um in selektiver Weise eine maximale oder minimale Verstärkung einzustellen.

6. Interaktives Videospielsystem nach Anspruch 4, bei dem die zweite Vielzahl von Signalpegeljustierern zwei Signalbedämpfer umfaßt, von denen jeder auf die entsprechende Schallokalisierungsinformation von der Spielkassette reagiert, um in selektiver Weise eine maximale oder minimale Verstärkung einzustellen.

7. Interaktives Videospielsystem nach Anspruch 1, bei dem der Schallprozessor folgendes umfaßt:
eine Vielzahl von Signalpegeljustierern (94, 96, 98, 100), von denen jeder das Audiosignal vom zweiten Audiosynthesizer (420) erhält und dessen Signalpegel in Reaktion auf die Schallpositionierungsinformation (102, 104, 106, 108) von der Spielkassette (10) justiert und ein entsprechendes pegeljustiertes Ausgangssignal erzeugt;
erste und zweite Phasenverschiebungs und Amplitudenjustierungsvorrichtungen (90, 92), von denen jede ein pegeljustiertes Ausgangssignal von einer ausgewählten der beiden Vielzahlen von Signalpegeljustierern erhält, um ein entsprechendes Ausgangssignal mit festgelegter Phasenverschiebung und Amplitudenjustierung auf einer frequenzabhängigen Basis über das gesamte Audiofrequenzspektrum zu erzeugen; und
erste und zweite Signalsummierungsvorrichtungen (78, 80), von denen jede ein entsprechendes Ausgangssignal von der ersten und zweiten Phasenverschiebungs- und Amplitudenjustierungsvorrichtung und ein Ausgangssignal von anderen Signalpegeljustierern als den ausgewählten erhält, um entsprechende erste und zweite Summenausgangssignale zu erzeugen, die entsprechend an das Lautsprecherpaar geliefert werden.

8. Interaktives Videospielsystem nach Anspruch 1, bei dem der Prozessor folgendes umfaßt:
eine Vielzahl von Phasenverschiebungs- und Amplitudenjustierungsvorrichtungen (90, 92), von denen jede ein entsprechendes der Audiosignale von dem zweiten Audiosynthesizer erhält und das Audiosignal teilt und eine selektive Phasenverschiebung und eine Amplitudenjustierung von mindestens einem der geteilten Audiosignale in Reaktion auf die Schallpositionierungsinformation von der Spielkassette vornimmt, um erste und zweite Ausgangssignale zu erzeugen, die eine unterschiedliche Phase und Phasenverschiebung und Amplitudenjustierung auf frequenzabhängiger Basis aufweisen; und
erste und zweite Signalsummierungsvorrichtungen (78, 80), von denen jede ein entsprechendes erstes und zweites Ausgangssignal von jeder der Vielzahlen von Phasenverschiebungs- und Amplitudenjustierungsvorrichtungen erhält und ein entsprechendes Summensignal erzeugt, das an das Lautsprecherpaar geliefert wird.

9. Interaktives Videospielsystem nach Anspruch 8, bei dem jede Phasenverschiebungs- und Amplitudenjustierungsvorrichtung folgendes umfaßt:
eine Vorrichtung zur Aufteilung des Audiosignals von dem zweiten Audiosynthesizer in zwei identische Audiosignale;
eine Filtervorrichtung (60), um einem der beiden identischen Audiosignale eine Phasenverschiebung und Amplitudenjustierung auf frequenzabhängiger Basis über das gesamte Audiofrequenzspektrum zu verleihen;
eine erste Vielzahl von Signalpegeljustierern (64, 68), die die zwei identischen Audiosignale erhalten und entsprechende pegeljustierte Signale in Reaktion auf die Schallpositionierungsdaten von der Spielkassette erzeugen;
eine zweite Vielzahl von Signalpegeljustierern (62, 66), von denen jeder ein Ausgangssignal von der Filtervorrichtung erhält, und die entsprechende pegeljustierte Signale in Reaktion auf die Schallpositionierungsdaten von der Spielkassette erzeugen; und
dritte und vierte Signalsummierungsvorrichtungen zur Summierung eines entprechenden Ausgangssignals von jeder der ersten und der zweiten Vielzahl von Signalpegeljustierern, wobei jede ein entsprechendes Summenausgangssignal erzeugt, das an eine entsprechende der ersten und der zweiten Signalsummierungsvorrichtung geliefert wird.

10. Interaktives Videospielsystem nach Anspruch 8, bei dem jede der Phasenverschiebungs- und Amplitudenjustierungsvorrichtungen eine Vielzahl von Signalpegeljustierern umfaßt, von denen jeder ein Audiosignal von dem zweiten Audiosynthesizer erhält und den jeweiligen Signalpegel in Reaktion auf die Schallpositionierungsdaten von der Spielkassette justiert und ein entsprechendes pegeljustiertes Ausgangssignal erzeugt;
erste und zweite Phasenverschiebungs- und Amplitudenjustierungsvorrichtungen, von denen jede ein pegeljustiertes Ausgangssignal von einer ausgewählten der beiden Vielzahlen von Signalpegeljustierern erhält, um ein entsprechendes Ausgangssignal mit festgelegter Phasenverschiebung und Amplitudenjustierung auf einer frequenzabhängigen Basis über das gesamte Audiofrequenzspektrum zu erzeugen; und
dritte und vierte Signalsummierungsvorrichtungen, von denen jede ein entsprechendes Ausgangssignal von ersten und zweiten Phasenjustierungsvorrichtungen und ein Ausgangssignal von anderen Signalpegeljustierern als den ausgewählten erhält, um entsprechende erste und zweite Summenausgangssignale zu erzeugen, die entsprechend an die erste und zweite Signalsummierungsvorrichtung geliefert werden.

11. Interaktives Videospielsystem nach Anspruch 1, bei dem der Schallprozessor folgendes umfaßt:
eine Vielzahl von Gruppen von vier Signalpegeljustierern (146, 152, 156, 160; 166, 168, 170, 172), wobei jeder Signalpegeljustierer in jeder Gruppe ein entsprechendes der Vielzahl von Audiosignalen von dem zweiten Audiosynthesizer erhält und jeder dessen Signalpegel in Reaktion auf die Schallpositionierungsinformation von der Spielkassette justiert und ein entsprechendes pegeljustiertes Ausgangssignal erzeugt;
erste, zweite, dritte und vierte Signalsummierungsvorrichtungen (148, 154, 158, 162), von denen jede ein Signal von einem entsprechenden Pegeljustierer in jeder Gruppe erhält und daraus entsprechende Summensignale erzeugt;
eine erste Phasenverschiebungs- und Amplitudenjustierungsvorrichtung (140), die das Summensignal von der ersten Signalsummierungsvorrichtung erhält und daraus ein erstes phasenverschobenes und amplitudenjustiertes Ausgangssignal erzeugt;
eine zweite Phasenverschiebungs- und Amplitudenjustierungsvorrichtung (142), die das Summensignal von der vierten Signalsummierungsvorrichtung erhält und daraus ein zweites phasenverschobenes und amplitudenjustiertes Ausgangssignal erzeugt;
eine fünfte Signalsummierungsvorrichtung (150), die das phasenverschobene und amplitudenjustierte Ausgangssignal von der ersten Phasenverschiebungs- und Amplitudenjustierungsvorrichtung und ein Summensignal von der dritten Signalsummierungsvorrichtung erhält und daraus ein Ausgangssignal erzeugt, das an einen der Lautsprecher des Lautsprecherpaares geliefert wird; und
eine sechste Signalsummierungsvorrichtung (184), die das phasenverschobene und amplitudenjustierte Signal von der zweiten Phasenverschiebungs- und Amplitudenjustierungsvorrichtung und ein Summensignal von der zweiten Signalsummierungsvorrichtung erhält und daraus ein Ausgangssignal erzeugt, das an den anderen Lautsprecher des Lautsprecherpaares geliefert wird.

## Revendications

1. Système de jeu vidéo interactif pour produire une image sonore à reproduire dans une paire d'enceintes acoustiques dans un jeu vidéo comprenant une unité centrale (120) et un bus (300) d'unité centrale dans une unité de base (14) et une cassette de jeu amovible (10) contenant des données d'affichage vidéo, des données audio et des données de localisation de son introduites dans la cassette de jeu et un synthétiseur de son relié à l'unité centrale (120) pour produire des signaux audio en fonction des données audio produites à partir de la cassette de jeu et acheminées via l'unité centrale (120); et caractérisé par
une unité de commande (400) pour joueur ayant un boîtier (20) contenant un micro-ordinateur de commande (480), un second synthétiseur (420) de son et un processeur (220) de son reliés au bus (300) d'unité centrale par le micro-ordinateur de commande (480) et reliés au second synthétiseur (420) de son contenu dans le boîtier (20) pour traiter chacun des signaux audio monauraux produits par le second synthétiseur (420) de son en réponse à des données de localisation de son provenant de l'unité centrale (120) et comportant des fonctions de transfert pour agir sur les signaux audio monauraux provenant du second synthétiseur (420) de son afin de produire des signaux audio à deux voies ayant entre eux une différence de phase et d'amplitude dépendant de la fréquence, lesdits signaux à deux voies étant appliqués à la paire d'enceintes acoustiques (25), dans lequel le bus (300) d'unité centrale relie l'unité centrale (120) à un port (540) de données série, ladite unité de commande (400) étant connectée pour communiquer avec ladite unité centrale (120) par ledit port (540) de données série.

2. Système de jeu vidéo interactif selon la revendication 1, dans lequel les enceintes acoustiques (35) de ladite paire sont fixées audit boîtier (20) de ladite unité de commande pour joueur.

3. Système de jeu vidéo interactif selon la revendication 1, comprenant en outre une mémoire (460) logée dans ledit boîtier (20) de ladite unité de commande pour joueur et étant reliée audit port (540) de données série, de façon que ladite mémoire (460) reçoive pour les mémoriser toutes les données audio provenant de la cassette (10) de jeu via le micro-ordinateur de commande (480), ledit micro-ordinateur de commande (480) reçoit ensuite des instructions de ladite unité centrale (120) pour fournir audit second synthétiseur (420) de son lesdites données audio mémorisées de ladite mémoire (460) et pour fournir audit processeur (220) de son lesdites données de localisation de son, grâce à quoi ledit processeur (220) de son produit lesdits signaux audio à deux voies à partir de signaux audio monauraux produits par ledit synthétiseur extérieur (420) de son.

4. Système de jeu vidéo interactif selon la revendication 1, dans lequel le processeur de son comprend:
une première pluralité de moyens de réglage (64,68) de niveau de signaux recevant lesdits signaux audio à deux voies issus des signaux audio monauraux et produisant des signaux respectifs à niveau réglé en réponse auxdites données (70,76) de localisation de son qui proviennent de ladite cassette de jeu;
une deuxième pluralité de moyens de réglage (62,66) de niveau de signaux recevant chacun un signal de sortie du processeur de son et produisant des signaux respectifs à niveau réglé en réponse auxdites informations (72,74) de localisation de son qui proviennent de ladite cassette (10) de jeu; et
un premier et un second moyens (78,80) de totalisation de signaux pour totaliser chacun un signal de sortie respectif issu de chacune desdites première et seconde pluralités de moyens de réglage de niveau de signaux et produisant chacun un signal respectif de totalisation appliqué à une enceinte respective de la paire d'enceintes acoustiques.

5. Système de jeu vidéo interactif selon la revendication 4, dans lequel ladite première pluralité de moyens de réglage de niveau de signaux comprend deux atténuateurs de signaux, réagissant chacun aux informations de localisation de son provenant de la cassette de jeu pour produire à volonté un gain maximal ou un gain minimal.

6. Système de jeu vidéo interactif selon la revendication 4, dans lequel ladite seconde pluralité de moyens de réglage de niveau de signaux comprend deux atténuateurs de signaux, réagissant chacun aux informations de localisation de son provenant de la cassette de jeu pour produire à volonté un gain maximal ou un gain minimal.

7. Système de jeu vidéo interactif selon la revendication 1, dans lequel le processeur de son comprend:
une pluralité de moyens de réglage (94,96,98,100) de niveau de signaux, recevant chacun le signal audio provenant du second synthétiseur (420) de son et réglant chacun le niveau de signal de celui-ci en réponse aux informations (102,104,106,108) de localisation de son provenant de la cassette (10) de jeu et produisant un signal de sortie respectif à niveau réglé;
un premier et un second moyens (90,92) de réglage de déphasage et d'amplitude, recevant chacun un signal de sortie à niveau réglé provenant d'un moyen choisi parmi ladite pluralité de moyens de réglage de niveau de signaux pour produire un signal de sortie respectif ayant un réglage prédéterminé de déphasage et d'amplitude dépendant de la fréquence sensiblement sur tout le spectre de fréquences audio; et
un premier et un second moyens (78,80) de totalisation de signaux, recevant chacun un signal respectif de sortie desdits premier et second moyens de réglage de déphasage et d'amplitude et un signal de sortie des moyens de réglage de niveau de signaux autres que ceux choisis pour produire des premier et second signaux de sortie totalisés respectifs appliqués respectivement à ladite paire d'enceintes acoustiques.

8. Système de jeu vidéo interactif selon la revendication 1, dans lequel le processeur comporte:
une pluralité de moyens (90,92) de réglage de déphasage et d'amplitude, recevant chacun du second synthétiseur de sons un signal respectif parmi les signaux audio et divisant le signal acoustique et, de manière sélective, réalisant le déphasage et réglant l'amplitude d'au moins un des signaux acoustiques divisés en réponse aux informations de localisation de son provenant de la cas-sette de jeu pour produire des premier et second signaux de sortie ayant une différence de phase et un réglage de déphasage et d'amplitude dépendant de la fréquence; et
un premier et un second moyens (78,80) de totalisation de signaux, recevant chacun un signal respectif parmi des premier et second signaux de sortie de chaque moyen parmi ladite pluralité de moyens de réglage de déphasage et d'amplitude et produisant chacun un signal totalisé respectif appliqué à la paire d'enceintes acoustiques.

9. Système de jeu vidéo interactif selon la revendication 8, dans lequel chacun desdits moyens de réglage de déphasage et d'amplitude comporte:
un moyen pour diviser en deux signaux audio identiques le signal audio produit par le second synthétiseur de son;
un moyen de filtrage (60) pour communiquer un réglage de déphasage et d'amplitude à un desdits deux signaux audio identiques en fonction de la fréquence sensiblement sur tout le spectre de fréquences audio;
une première pluralité de moyens de réglage (64, 68) de niveau de signaux recevant lesdits deux signaux audio identiques et produisant des signaux respectifs à niveau réglé en réponse auxdites données de localisation de son provenant de ladite cassette de jeu;
une seconde pluralité de moyens de réglage (62,66) de niveau de signaux recevant chacun un signal de sortie dudit moyen de filtrage et produisant des signaux respectifs à niveau réglé en réponse auxdites données de localisation de son provenant de ladite cassette de jeu; et
des troisième et quatrième moyens de totalisation pour totaliser chacun un signal de sortie respectif de chacune desdites première et seconde pluralités de moyens de réglage de niveau de signaux et pour produire chacun un signal totalisé respectif de sortie de ceux-ci appliqué à un moyen respectif parmi lesdits premier et second moyens de totalisation de signaux.

10. Système de jeu vidéo interactif selon la revendication 8, dans lequel chacun desdits moyens de réglage de déphasage et d'amplitude comporte une pluralité de moyens de réglage de niveau de signaux, recevant chacun un signal audio du second synthétiseur de son et réglant chacun le niveau de signal de celui-ci en réponse aux données de localisation de son provenant de la cassette de jeu et produisant un signal de sortie respectif à niveau réglé;
un premier et un second moyens de réglage de déphasage et d'amplitude recevant chacun, d'un moyen choisi dans ladite pluralité de moyens de réglage de niveau de signaux, un signal de sortie à niveau réglé pour produire un signal de sortie respectif ayant un réglage de déphasage et d'amplitude prédéterminé en fonction de la fréquence sensiblement sur tout le spectre de fréquences audio; et
des troisième et quatrième moyens de totalisation de signaux, recevant chacun un signal de sortie respectif des premier et second moyens de réglage de phase et un signal de sortie de moyens de réglage de niveau de signaux autres que lesdits moyens choisis pour produire le premier et second signaux de sortie totalisés respectifs appliqués respectivement auxdits premier et second moyens de totalisation de signaux.

11. Système de jeu vidéo interactif selon la revendication 1, dans lequel le processeur de son comporte:
une pluralité de groupes de quatre moyens de réglage (146,152,156,160; 166,168,170,172) de niveau de signaux, chaque moyen de réglage de niveau de signal de chaque groupe recevant un signal respectif de la pluralité de signaux audio produits par le second synthétiseur de son et chacun réglant le niveau de signal de celui-ci en réponse aux informations de localisation de son provenant de la cassette de jeu et produisant un signal de sortie respectif à niveau réglé;
des premier, second, troisième et quatrième moyens (148,154,158,162) de totalisation de signaux, recevant chacun un signal d'un moyen respectif de réglage de niveau de chaque groupe et produisant à partir de celui-ci des signaux totalisés respectifs;
un premier moyen (140) de réglage de déphasage et d'amplitude recevant dudit premier moyen de totalisation de signal ledit signal totalisé et produisant à partir de celui-ci un premier signal de sortie à déphasage et amplitude réglés;
un second moyen (142) de réglage de déphasage et d'amplitude recevant dudit quatrième moyen de totalisation de signal ledit signal totalisé et produisant à partir de celui-ci un second signal de sortie à déphasage et amplitude réglés;
un cinquième moyen (150) de totalisation de signal recevant dudit premier moyen de réglage de déphasage et d'amplitude ledit signal de sortie à déphasage et amplitude réglés et recevant un signal totalisé dudit troisième moyen de totalisation de signal et produisant à partir de ceux-ci un signal de sortie appliqué à une enceinte de la paire d'enceintes acoustiques; et
un sixième moyen (184) de totalisation de signal recevant dudit second moyen de réglage de déphasage et d'amplitude ledit signal à déphasage et amplitude réglés et recevant un signal totalisé dudit second moyen de totalisation de signal et produisant à partir de ceux-ci un signal de sortie appliqué à une enceinte de la paire d'enceintes acoustiques.
